# EUROPEAN PATENT SPECIFICATION

(11) **EP 3 832 215 B1**
(45) Date of publication and mention of the grant of the patent: **15.11.2023**
(21) Application number: 20209465.2
(22) Date of filing: 24.11.2020
(51) Int. Cl.: F24F 7/06, F24F 13/062, F24F 1/0071, F24F 3/16, F24F 1/0007, F24F 8/10, B01D 46/00, F04D 25/08, F24F 13/08, F24F 13/20

(54) **DIRECTIONAL AIRFLOW DEVICE**
VORRICHTUNG FÜR DIREKTIONALEN LUFTSTROM
DISPOSITIF D'ÉCOULEMENT D'AIR DIRECTIONNEL

(30) Priority: 02.12.2019 KR 20190158513
(43) Date of publication of application: 09.06.2021
(73) Proprietor: LG Electronics Inc., Yeongdeungpo-gu Seoul 07336 (KR)
(72) Inventor: YANG, Tae Man, 08592 Seoul (KR); CHUNG, Choon Myun, 08592 Seoul (KR); PARK, Joon Min, 08592 Seoul (KR)
(74) Representative: Vossius & Partner Patentanwälte Rechtsanwälte mbB

(56) References cited:
- EP-A1- 3 078 917
- EP-A2- 2 426 427
- WO-A1-2018/174640
- KR-A- 20180 000 285

## Description

### BACKGROUND OF THE INVENTION

### Field of the Invention

The present invention relates to a directional airflow device that discharges air in all directions of 360 degrees.

### Description of the Related Art

In general, an air cleaner is configured to purify an indoor space such as a home or an office. According to the air cleaner in the related art, there is a problem in that the capacity thereof is limited, and thus purification of air in the entire indoor space is limited. Therefore, while air around the air cleaner is purified, air in a space far from the air cleaner is difficult to purify.

In order to solve this, efforts have been made to improve the performance of a fan provided in the air cleaner. However, noise generated from the fan increases as a blowing amount of the fan increases, resulting in a problem in that the reliability of a product is deteriorated.

Consequently, due to the limited capacity of the air cleaner, the air cleaner is required to be moved by a user in order to purify air in a desired space, which is inconvenient.

In an effort to solve this problem, a cylindrical air cleaner has been disclosed in Korean Patent Application Publication No. 10-2018-0000285 (Patent Document 1).

The air cleaner of Patent Document 1 is formed in a cylindrical shape to purify indoor air in all directions of 360 degrees. In detail, indoor air is suctioned through a first suction portion 102 and a second suction portion 202, and filtered air is discharged to a first discharge portion 105 and a second discharge portion 205 as a first blowing device 100 and a second blowing device 200 are driven.

The second blowing device 200 includes a flow conversion device 300 so that a directional airflow that rotates independently and causes filtered air to be discharged in a specific direction may be formed, thereby delivering air in a specific direction in which air pollution is severe.

Meanwhile, the first blowing device 100 discharges air in all directions of 360 degrees, but does not form a directional airflow having straightness in a specific direction. Therefore, there is a problem in that a space for installing a separate motor and fan for forming such a directional airflow is not secured.

The first blowing device 100 includes a first air guide device 170 for guiding a flow of air. The first air guide device 170 includes a plurality of guide ribs 175 arranged in a spaced apart relationship to guide filtered air upward. However, the guide ribs 175 also serve only to guide air upward, and thus do not form a directional airflow that delivers air in a specific direction.

The foregoing is intended merely to aid in the understanding of the background of the present disclosure, and is not intended to mean that the present disclosure falls within the purview of the related art that is already known to those skilled in the art.

### Documents of Related Art

(Patent document 1) Korean Patent Application Publication No. 10-2018-0000285
WO 2018/174640 A1 relates to an unpowered cold/warm air blower that can be driven by minimal power according to the preamble of claim 1. The cold/warm air blower comprises a plurality of first magnetic bodies and a second magnetic body.

### SUMMARY OF THE INVENTION

The invention is defined by independent claim 1. Further embodiments of the invention are defined by the dependent claims. Accordingly, the present disclosure has been made keeping in mind the above problems occurring in the related art, and an objective of the present disclosure is to provide a directional air flow device that forms a directional airflow without requiring the provision of a separate driving device, while maintaining a cylindrical shape.

In order to achieve the above objective, according to one aspect of the present disclosure, there is provided a directional airflow device according to claim 1, including: a cylindrical fan accommodating portion including a fan assembly that is configured to generate a flow of air; and a cylindrical guide accommodating portion integrally formed on the fan accommodating portion, and including an airflow forming member that is configured to discharge air suctioned by the fan assembly and guided to an airflow forming space, through a discharge port, wherein the airflow forming member is configured such that at least two helical bodies having different pitches are arranged in the airflow forming space along a circumferential direction of the guide accommodating portion, so that a part of the helical bodies may form a directional airflow having straightness, and a remaining part may discharge air radially.

The airflow forming space of the guide accommodating portion may be isolated from a central motor accommodating chamber by a partition wall.

Each of the helical bodies may have the same width as that of the airflow forming space.

The helical bodies may include: a first helical body extending in a strip shape along a circumferential direction of the airflow forming space, and formed in a helical shape to face the discharge port; and according to the invention, a second helical body extending from the same starting point as that of the first helical body and formed on an upper surface of the first helical body so as to be relatively steeper than the first helical body, the second helical body extending along the circumferential direction of the airflow forming space and being formed in a helical shape to be oriented toward the discharge port.

The air may flow along a lower end surface of the first helical body to form the directional airflow having straightness, and may flow along an upper end surface of the second helical body to be discharged in all directions through the discharge port.

The second helical body may be configured to compensate for a height difference caused by a step between the second helical body and the first helical body.

The first helical body may extend to have a central angle of 250 to 290 degrees with a center of the airflow forming space as an origin, and the second helical body may extend to have a central angle of 80 to 100 degrees with the center of the airflow forming space as the origin.

The first helical body may be configured to have a pitch of 110 to 120 mm, and the second helical body may be configured to have a pitch of 340 to 360 mm.

A rotary motor may be accommodated in the motor accommodating chamber, and the rotary motor may be configured to rotate a blowing fan of the fan assembly provided under the guide accommodating portion.

In the directional airflow device according to the present disclosure, the following effects may be obtained.

According to the present disclosure, since the air cleaner may include the directional airflow device that imparts directionality and straightness to filtered air without requiring the provision of a separate driving device, the air cleaner may discharge the filtered air in all directions of 360 degrees and purify indoor air in a specific area, while maintaining a cylindrical shape.

According to the present disclosure, since the first helical body of the directional airflow device may allow air to be discharged with directionality, designers and users may predict the direction in which air will be discharged. Therefore, it may be possible to deliberately set the direction so that a directional airflow may be discharged to an indoor area with high pollution, and thus, more effective indoor air purification may be possible.

According to the present disclosure, the second helical body of the directional airflow device may prevent air separated from the first helical body from stagnating in the airflow forming space and may guide the air to be discharged in all directions of 360 degrees. Therefore, the straightness of the directional airflow may be improved, and the air discharge amount in all directions of 360 degrees may be increased.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating an outer appearance of an air cleaner with the directional airflow device according to the present disclosure;
FIG. 2 is a perspective view illustrating an internal configuration of the air cleaner with the directional airflow device according to an embodiment of the present disclosure;

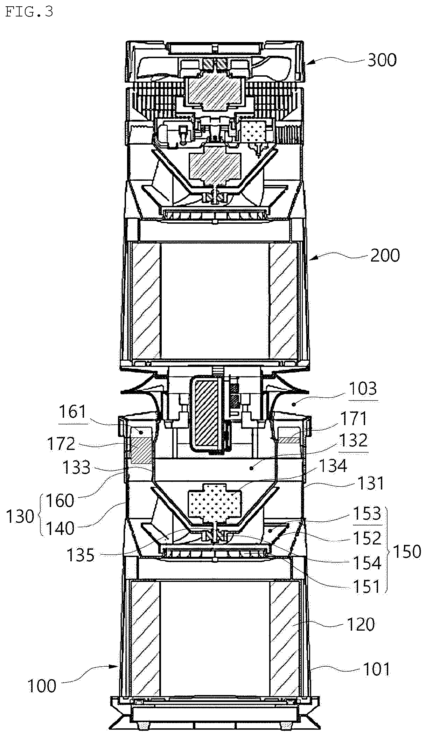

FIG. 3 is a sectional view of FIG. 1;
FIGS. 4A and 4B are respectively a transparent front view and a transparent perspective view illustrating a directional airflow device according to an embodiment of the present disclosure;
FIG. 5 is a top view illustrating the directional airflow device according to the embodiment of the present disclosure;
FIG. 6 is a transparent perspective view illustrating airflow inside the directional airflow device according to the embodiment of the present disclosure;
FIG. 7 is a top view illustrating airflow of the directional airflow device according to the embodiment of the present disclosure; and
FIG. 8 is a perspective view illustrating airflow from the exterior of the air cleaner illustrated in FIG. 3.

### DETAILED DESCRIPTION OF THE INVENTION

Hereinafter, embodiments of the present invention will be described in detail with reference to the illustrative drawings. Regarding the reference numerals assigned to the components in the drawings, it should be noted that the same reference numerals are used throughout the different drawings to designate the same or similar components. Also, in the description of embodiments, detailed descriptions of known functions or structures may make the gist of the present disclosure unclear, the detailed descriptions of the known functions or structures will be omitted.

Further, when describing the components of the present disclosure, terms such as first, second, A, B, (a), or (b) may be used. Since these terms are provided merely for the purpose of distinguishing the components from each other, they do not limit the nature, sequence, or order of the components. In a case where it is described that any component is "connected" or "coupled" to another component, it can be directly connected or coupled to the other component. However, it will be understood that another component may be "connected" or "coupled" between the components.

Exemplary embodiments of a directional airflow device and an air cleaner with the same according to the present disclosure will be described with reference to the accompanying drawings. The air cleaner is not covered by the claims and does not form part of the invention, it is shown as an example to showcase details of the claimed directional airflow device.

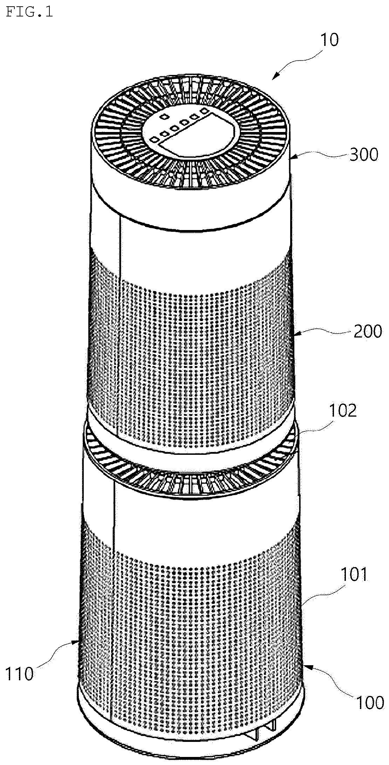

Referring to FIG. 1, the air cleaner 10 according to an an example not covered by the claims, may include blowing devices 100 and 200 for generating airflow and a flow conversion device 300 for converting a discharge direction of the airflow generated by the blowing devices 100 and 200, and may have a cylindrical appearance.

The blowing devices 100 and 200 may include a first blowing device 100 and a second blowing device 200 for generating airflow.

The flow conversion device 300 may be provided on the second blowing device 200, and the first blowing device 100 may be provided under the second blowing device 200, so that the first and second blowing devices 100 and 200 and the flow conversion device 300 may be arranged in a vertical direction. The first and second blowing devices 100 and 200 may respectively suction in air in an indoor space, and then perform filtering to filter out pollutants, and finally discharge air resulting from the filtering (hereinafter, filtered air).

The first blowing device 100 and the second blowing device 200 may have a substantially cylindrical shape similar to that of the air cleaner 10, which may make it possible to suction in indoor air and discharge filtered air, in all directions of 360 degrees. Here, all directions refer to directions radial with respect to the air cleaner 10.

Meanwhile, in the present embodiment, the second blowing device 200 may include the flow conversion device 300 so that the second blowing device 200 may blow filtered air to a specific area where indoor air is contaminated. However, the first blowing device 100 may include no flow conversion device 300. However, the first blowing device 100 may include an airflow forming member 170 which will be described below, so that filter air is blown to a specific area. Therefore, in the present disclosure, main parts are provided in the first blowing device 100, and thus, detailed descriptions of other structures, i.e., the second blowing device 200 and the flow conversion device 300, will be omitted.

The first blowing device 100 may include a casing 101 and a discharge grill 102 that define an outer appearance thereof. The casing 101 may be formed in a substantially cylindrical shape. In detail, the shape thereof may be a truncated cone shape close to a cylindrical shape. The casing 101 may be detachably coupled to the first blowing device 100, so that when maintenance work such as repair or filter replacement is required, the maintenance work may be performed by separating the casing 101.

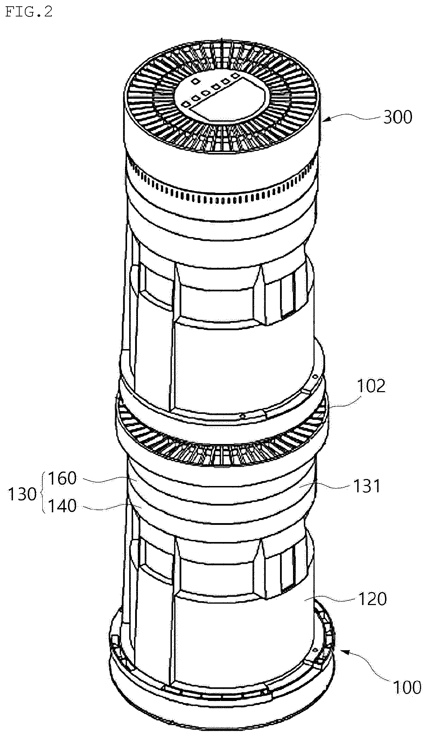

The discharge grill 102 may be attached to an upper portion of the casing 101. The discharge grill 102 may have a mesh shape and may close an open portion of the casing 101. Since the discharge grill 102 may have a mesh shape, as illustrated in FIG. 2, filtered air may exit through a discharge port 103 and spread to the indoor space.

A suction grill 110 may be installed at a lower portion of the first blowing device 100. The suction grill 110 may be formed on an outer surface of the casing 101 or installed at a lower end of the first blowing device 100 to suction in air present close to a bottom surface thereof. The suction grill 110 may serve as a passage through which indoor air is suctioned and introduced to an inside of the air cleaner 10, and the shape thereof is not particularly limited. However, the suction grill 110 may be formed evenly along a circumferential direction of the first blowing device 100 to suction in indoor air in all directions of 360 degrees. In addition, the suction grill 110 is preferably formed close to a filter 120 of the first blowing device 100.

FIG. 2 is a perspective view illustrating the appearance after separating the casing 101 of the air cleaner 10 according to the present embodiment. When the casing 101 of the first blowing device 100 is removed, there is a configuration including the filter 120 and a directional airflow device 130 according to the invention, installed inside of the casing 101.

The filter 120 that is part of the example embodiment not covered by the claims, be disposed at a position corresponding to the suction grill 110, and the directional airflow device 130 may be installed on the filter 120. The filter 120 may remove pollutants (e.g., dust, odor, etc.) present in indoor air suctioned through the suction grill 110 and convert the same into filtered air. The filter 120 may be disposed in a circumferential direction to conform to the shape of the air cleaner 10. Therefore, the filter 120 may remove all pollutants of indoor air suctioned in all directions through the suction grill 110. The filter 120 may be maintained in the arrangement in the circumferential direction through a separate support device (not illustrated).

The directional airflow device 130 may be installed on the filter 120 to directly generate airflow. The directional airflow device 130 may include a housing 131 defining an outer appearance thereof, and a motor accommodating chamber 132 formed therein.

The housing 131 may be located on the filter 120 and may have a substantially cylindrical shape. A partition wall 133 may be formed in the housing 131 in a circumferential direction at a position spaced inward apart from an outer surface of the housing 131 by a predetermined distance.

By the partition wall 133, the motor accommodating chamber 132 may be formed inside of the housing 131. The motor accommodating chamber 132 may be gradually reduced in diameter toward the filter 120 and then completely sealed, and the partition wall 133 may also be formed to conform to the shape of the motor accommodating chamber 132.

A rotary motor 134 may be installed on the bottom of the motor accommodating chamber 132. The rotary motor 134 may include a rotary shaft 135. The rotary shaft 135 may pass through the bottom of the motor accommodating chamber 132 and may be coupled to a fan assembly 150 which will be described later. When the rotary motor 134 generates torque, the torque may be transmitted to the fan assembly 150 through the rotary shaft 135.

The housing 131 of the directional airflow device 130 according to the invention, is divided into a fan accommodating portion 140 and a guide accommodating portion 160. The fan assembly 150 is installed in the fan accommodating portion 140. The fan assembly 150 may be coupled to the rotary motor 134 to directly generate a flow of air, and to deliver the air to the guide accommodating portion 160.

The fan assembly 150 may include a blowing fan 151 installed toward the filter 120. When the blowing fan 151 rotates, indoor air may be introduced into the suction grill 110 and then may pass through the filter 120, thereby becoming filtered air from which pollutants are removed.

The blowing fan 151 may be formed on a fan hub 152. The fan hub 152 may define an outer appearance of the fan assembly 150, and may include a blowing path 153 formed inside thereof to guide filtered air having passed through the filter 120 to the guide accommodating portion 160 through the blowing path 153. The fan hub 152 may be formed to conform to the shape of the motor accommodating chamber 132 of which the cross-sectional area may be gradually reduced downward. That is, the fan hub 152 may be formed in parallel with an outer surface thereof spaced apart from the partition wall 133 by a predetermined distance. Therefore, the blowing path 153 may be formed to be inclined upward to face the guide accommodating portion 160.

A shaft coupling portion 154 may be formed in a center of the fan hub 152. The rotary shaft 135 protruding through the partition wall 133 in the motor accommodating chamber 132 may be coupled to the shaft coupling portion 154. More precisely, the blowing fan 151 formed on the fan hub 152, and the rotary shaft 135 may be rotatably coupled to each other through the shaft coupling portion 154. Therefore, the fan hub 152 may not be rotated by the torque of the rotary motor 134, but the blowing fan 151 formed on the fan hub 152 may rotate to generate a flow of air.

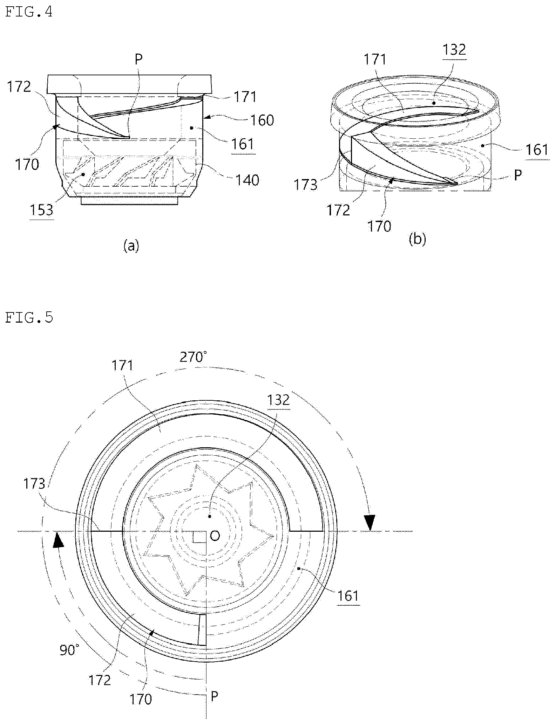

Referring to FIGS. 4A, 4B, and 5, the guide accommodating portion 160 may include an annular airflow forming space 161 extending in the longitudinal direction of the housing 131. The airflow forming space 161 and the motor accommodating chamber 132 may be isolated from each other by the partition wall 133, and the airflow forming space 161 may be formed at a position surrounding the motor accommodating chamber 132. The guide accommodating portion 160 may discharge filtered air delivered from the fan assembly 150 of the fan accommodating portion 140 to the indoor space.

An airflow forming member 170 is formed in the guide accommodating portion 160. When the airflow forming member 170 delivers filtered air delivered to the guide accommodating portion 160 through the blowing path 153 to the indoor space, the airflow forming member 170 may guide the filtered air to be biased and discharged in one direction. The airflow forming member 170 may allow the filtered air not to simply pass through the guide accommodating portion 160 and be discharged above the discharge port 103, but to flow along a flow path conforming to the shape of the airflow forming member 170, so that the flow rate of the filtered air may be increased and a biased flow of filtered air may occur. That is, the airflow forming member 170 may discharge the filtered air in all directions of 360 degrees through the discharge port 103, while simultaneously forming and discharging a directional airflow biased toward one side.

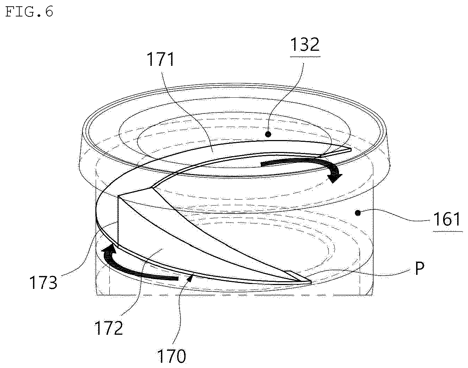

Referring to FIGS. 5 and 6, the airflow forming member 170 includes a first helical body 171 and a second helical body 172, and is formed in the airflow forming space 161.

The first helical body 171 may be formed in a helical shape to be oriented toward the discharge port 103 along the longitudinal direction of the directional airflow device 130 in the airflow forming space 161. The first helical body 171 may be configured to have the same width as that of the airflow forming space 161 so that filtered air may flow along a lower end surface of the first helical body 171.

In detail, the first helical body 171 may have a strip shape. The first helical body 171 is formed along a circumferential direction of the airflow forming space 161. The length of the first helical body 171 may be defined by drawing an arc having a central angle of 250 to 290 degrees with the center of the airflow forming space 161 as an origin, and preferably drawing an arc having a central angle of 260 to 280 degrees. In addition, the first helical body 171 may be configured to have a pitch of 110 to 120 mm. The size of the width of the first helical body 171 may be determined according to that of the airflow forming space 161. When the first helical body 171 does not have a sufficient length, a biased flow of filtered air may be reduced with the result that a directional airflow having a sufficient intensity may not be formed. In addition, when the first helical body 171 is formed excessively long at an angle of equal to or greater than 360 degrees, airflow that may spread in all directions of 360 degrees other than the directional airflow may not be formed.

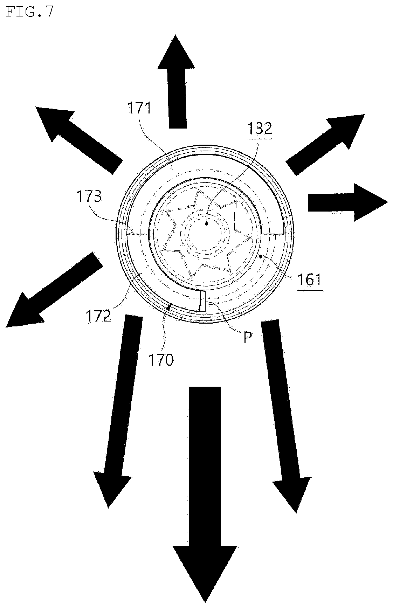

Referring to FIG. 7, the direction in which a tip end of the first helical body 171 is oriented is the same as the direction in which the directional airflow is discharged to the indoor space. The filter air may flow along the lower end surface of the first helical body 171 as the flow rate thereof gradually increases, and may be discharged in the direction in which the tip end of the first helical body 171 is oriented. This may be the same action as the action that an object rotating around the origin flies in a direction of a point of contact of a circle centered on the origin by centrifugal force generated when coupling force with the origin is released. Since the filtered air is a fluid, the filtered air may not advance only in the direction in which the tip end of the first helical body 171 is oriented. However, by creating a biased blow of filtered air in a specific direction as described above, a directional airflow having straightness may be generated.

Referring to FIGS. 5 and 6, the second helical body 172 is formed on an upper surface of the first helical body 171. As in the case of the first helical body 171, the second helical body 172 may be formed in a helical shape to be oriented toward the discharge port 103 along the longitudinal direction of the directional airflow device 130 in the airflow forming space 161. The second helical body 172 may configured to have the same width as that of the airflow forming space 161, so that filtered air that has passed through the first helical body 171 may flow along an upper end surface of the second helical body 172.

In detail, the second helical body 172 has the same starting point P as that of the first helical body 171, and is formed along the circumferential direction of the airflow forming space 161. The length of the second helical body 172 may be defined by drawing an arc having a central angle of 80 to 100 degrees with the center of the airflow forming space 161 as an origin, and preferably drawing an arc having a central angle of 90 degrees. In addition, the second helical body 172 may have a pitch of 340 to 360 mm, so that the second helical body 172 is formed relatively steeper than the first helical body 171. Therefore, a step 173 may be formed between the second helical body 172 and the first helical body 171, resulting in a height difference. The second helical body 172 may have a strip shape similar to that of the first helical body 171, but may be formed to compensate for a gap caused by the step 173, the gap corresponding to the height difference. The size of the width of the second helical body 172 may be determined according to that of the airflow forming space 161.

Since the second helical body 172 is formed steeper than the first helical body 171, the second helical body 172 may serve to block a part of the flow path of filtered air, thereby preventing spreading of the filtered air discharged in the direction of the tip end of the first helical body 171 to thereby enhance the directional airflow. That is, the straightness of the directional airflow may be improved. At the same time, since the second helical body 172 may have a helical shape with an inclination, the second helical body 172 may guide air that has not yet exited through the discharge port 103 to continue to flow along the upper surface of the second helical body 172 without stagnating in the airflow forming space 161. The air flowing along the upper surface of the second helical body 172 may be further reduced in flow velocity by the step 173 and may be discharged in all directions of 360 degrees.

Next, a process in which indoor air is suctioned and discharged by the first blowing device 100 will be described.

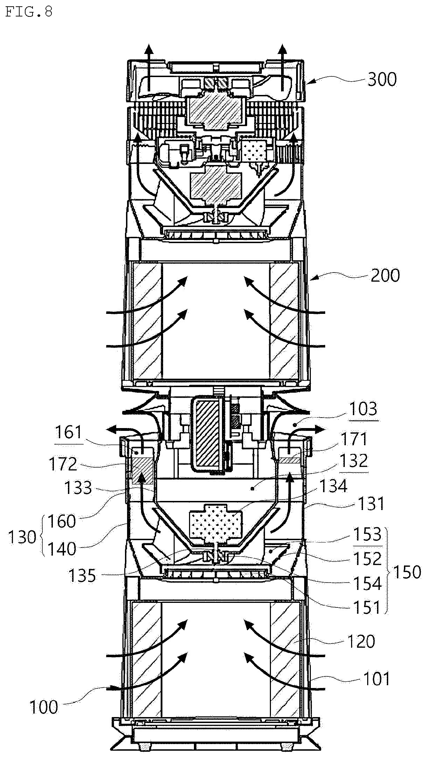

Referring to FIG. 8, when the rotary motor 134 provided in the directional airflow device 130 rotates, torque may be transmitted to the blowing fan 151 by the rotary shaft 135 so that the blowing fan 151 may be rotated in conjunction with the rotation of the rotary motor 134. As the blowing fan 151 rotates, contaminated indoor air outside the air cleaner 10 may be suctioned into the air cleaner 10 through the suction grill 110 of the casing 101.

The indoor air suctioned into the air cleaner 10 may pass through the filter 120, thereby becoming filtered air from which pollutants such as odor molecules and dust are removed, and then the filtered air may move from the inside of the filter toward the fan assembly 150.

The filtered air that has reached the fan assembly 150 may pass through the blowing path 153 and reach the airflow forming space 161 of the directional airflow device 130. The filtered air may move toward the discharge port 103 while helically rotating along the lower end surface of the first helical body 171. Due to a relatively narrow space compared to the blowing path 153 provided in the fan accommodating portion 140 and a shape in which the flow path is partially blocked by the first helical body 171, the flow velocity of the filtered air may be increased.

The filtered air which has reached the tip end of the first helical body 171 while rotating helically may form a directional airflow by centrifugal force and inertia in the direction in which the tip end of the first helical body 171 is oriented and may be discharged through the discharge port 103. The direction in which the directional airflow is formed may be controlled according to the shape of the first helical body 171, so that the filtered air may be discharged in a direction desired by a user. At this time, the second helical body 172 may prevent the filtered air having passed through the first helical body 171 from spreading, thereby improving the straightness of the directional airflow.

Meanwhile, filtered air that has not yet been discharged by the directional airflow may continue to flow toward the discharge port 103 along the upper surface of the second helical body 172 having a helical shape with an inclination. Therefore, the filtered air flowing along the upper surface of the second helical body 172 may not stagnate in the airflow forming space 161, but may be discharged through the discharge port 103 in all directions of 360 degrees.

In the present embodiment described above, the airflow forming member 170 may be provided only in the first blowing device 100. However, the present disclosure is not limited thereto, and it will be understood that the airflow forming member 170 may be installed in the second blowing device (200) as only the directional airflow device itself is claimed, the blowing devices being part of the example embodiment not covered by the claims.

## Claims

1. A directional airflow device, comprising:
a cylindrical fan accommodating portion (140) including a fan assembly (150) that is configured to generate a flow of air; and
a cylindrical guide accommodating portion (160) integrally formed on the fan accommodating portion (140), and including an airflow forming member (170) that is configured to discharge air suctioned by the fan assembly (150) and guided to an airflow forming space (161), through a discharge port (103),
**characterized in that** the airflow forming member (170) is configured such that at least two helical bodies (171,172) having different pitches are arranged in the airflow forming space (161) along a circumferential direction of the guide accommodating portion (160),
wherein one helical body (172) of the helical bodies (171,172) extends from the same starting point as the other helical body (171), is formed relatively steeper on the upper surface of the other helical body (171), and is formed shorter than the other helical body (171).

2. The directional airflow device of claim 1, wherein the airflow forming space (161) of the guide accommodating portion (160) is isolated from a central motor accommodating chamber (132) by a partition wall (133).

3. The directional airflow device of claim 1 or 2, wherein each of the helical bodies (171,172) has the same width as that of the airflow forming space (161).

4. The directional airflow device of any one of claims 1 to 3, wherein the helical bodies (171,172) comprise:
the first helical body (171) extending in a strip shape along the circumferential direction of the airflow forming space (161), and formed in a helical shape to face the discharge port (103); and
the second helical body (172) formed on the upper surface of the first helical body (171) and extending along the circumferential direction of the airflow forming space (161) and being formed in a helical shape to be oriented toward the discharge port (103).

5. The directional airflow device of claim 4, wherein a lower end surface of the first helical body (171) faces a blowing path (153) of the fan assembly (150), and an upper end face of the second helical body (172) faces the discharge port (103) .

6. The directional airflow device of claim 4 or 5, wherein the second helical body (172) is configured to compensate for a height difference caused by a step between the second helical body (172) and the first helical body (171).

7. The directional airflow device of any one of claims 4 to 6, wherein the first helical body (171) extends to have a central angle of 250 to 290 degrees with a center of the airflow forming space (161) as an origin, and
the second helical body (172) extends to have a central angle of 80 to 100 degrees with the center of the airflow forming space (161) as the origin.

8. The directional airflow device of any one of claims 4 to 7, wherein the first helical body (171) is configured to have a pitch of 110 to 120 mm, and
the second helical body (172) is configured to have a pitch of 340 to 360 mm.

9. The directional airflow device of any one of claims 2 to 8 insofar as dependent on claim 2, wherein a rotary motor (134) is accommodated in the motor accommodating chamber (132), and the rotary motor (134) is configured to rotate a blowing fan of the fan assembly (150) provided under the guide accommodating portion (160).

## Patentansprüche

1. Vorrichtung für direktionalen Luftstrom, aufweisend:
einen zylindrischen Gebläseaufnahmeabschnitt (140) mit einer Gebläseanordnung (150), die zum Erzeugen eines Luftstroms konfiguriert ist, und
einen zylindrischen Führungsaufnahmeabschnitt (160), der einstückig an dem Gebläseaufnahmeabschnitt (140) ausgebildet ist und ein Luftstrombildungselement (170) umfasst, das zum Abgeben der von der Gebläsebaugruppe (150) angesaugten und zu einem Luftstrombildungsraum (161) geführten Luft durch eine Auslassöffnung (103) konfiguriert ist,
**dadurch gekennzeichnet, dass**
das Luftstrombildungselement (170) so konfiguriert ist, dass mindestens zwei spiralförmige Körper (171, 172) mit unterschiedlichen Steigungen entlang einer Umfangsrichtung des Führungsaufnahmeabschnitts (160) in dem Luftstrombildungsraum (161) angeordnet sind, wobei sich der eine spiralförmige Körper (172) der spiralförmigen Körper (171, 172) von demselben Ausgangspunkt wie der andere spiralförmige Körper (171) erstreckt, relativ steiler auf der Oberseite des anderen spiralförmigen Körpers (171) und kürzer als der andere spiralförmige Körper (171) ausgebildet ist.

2. Vorrichtung für direktionalen Luftstrom nach Anspruch 1, wobei der Luftstrombildungsraum (161) des Führungsaufnahmeabschnitts (160) durch eine Trennwand (133) von einer zentralen Motoraufnahmekammer (132) isoliert ist.

3. Vorrichtung für direktionalen Luftstrom nach Anspruch 1 oder 2, wobei jeder der spiralförmigen Körper (171, 172) die gleiche Breite wie der Luftstrombildungsraum (161) aufweist.

4. Vorrichtung für direktionalen Luftstrom nach einem der Ansprüche 1 bis 3, wobei die spiralförmigen Körper (171, 172) aufweisen:
den ersten spiralförmigen Körper (171), der sich streifenförmig entlang der Umfangsrichtung des Luftstrombildungsraums (161) erstreckt und spiralförmig so ausgebildet ist, dass er der Auslassöffnung (103) zugewandt ist, und
den zweiten spiralförmigen Körper (172), der auf der Oberseite des ersten spiralförmigen Körpers (171) ausgebildet ist und sich entlang der Umfangsrichtung des Luftstrombildungsraums (161) erstreckt und spiralförmig so ausgebildet ist, dass er in Richtung der Auslassöffnung (103) ausgerichtet ist.

5. Vorrichtung für direktionalen Luftstrom nach Anspruch 4, wobei eine untere Stirnfläche des ersten spiralförmigen Körpers (171) einem Blasweg (153) der Gebläseanordnung (150) zugewandt ist und eine obere Stirnfläche des zweiten spiralförmigen Körpers (172) der Auslassöffnung (103) zugewandt ist.

6. Vorrichtung für direktionalen Luftstrom nach Anspruch 4 oder 5, wobei der zweite spiralförmige Körper (172) zum Ausgleichen eines Höhenunterschieds konfiguriert ist, der durch eine Stufe zwischen dem zweiten spiralförmigen Körper (172) und dem ersten spiralförmigen Körper (171) verursacht wird.

7. Vorrichtung für direktionalen Luftstrom nach einem der Ansprüche 4 bis 6, wobei sich der erste spiralförmige Körper (171) so erstreckt, dass er einen Mittenwinkel von 250 bis 290 Grad mit einer Mitte des Luftstrombildungsraums (161) als Ursprung hat, und
sich der zweite spiralförmige Körper (172) so erstreckt, dass er einen Mittenwinkel von 80 bis 100 Grad mit der Mitte des Luftstrombildungsraums (161) als Ursprung hat.

8. Vorrichtung für direktionalen Luftstrom nach einem der Ansprüche 4 bis 7, wobei der erste spiralförmige Körper (171) so konfiguriert ist, dass er eine Steigung von 110 bis 120 mm aufweist, und
der zweite spiralförmige Körper (172) so konfiguriert ist, dass er eine Steigung von 340 bis 360 mm aufweist.

9. Vorrichtung für direktionalen Luftstrom nach einem der Ansprüche 2 bis 8, insofern diese von Anspruch 2 abhängen, wobei ein Drehmotor (134) in der Motoraufnahmekammer (132) untergebracht ist und der Drehmotor (134) zum Drehen eines Gebläses der unter dem Führungsaufnahmeabschnitt (160) vorgesehenen Gebläsebaugruppe (150) konfiguriert ist.

## Revendications

1. Dispositif d'écoulement d'air directionnel, comprenant :
une partie cylindrique de réception de ventilateur (140) comprenant un ensemble ventilateur (150) configuré pour générer un écoulement d'air ; et
une partie cylindrique de réception de guide (160) formée d'une seule pièce sur la partie de réception de ventilateur (140), et comprenant un élément de formation d'écoulement d'air (170) configuré pour décharger de l'air aspiré par l'ensemble ventilateur (150) et guidé vers un espace de formation d'écoulement d'air (161), à travers un orifice de décharge (103),
**caractérisé en ce que**
l'élément de formation d'écoulement d'air (170) est configuré de sorte qu'au moins deux corps hélicoïdaux (171, 172) ayant des pas différents soient disposés dans l'espace de formation d'écoulement d'air (161) dans une direction circonférentielle de la partie de réception de guide (160),
dans lequel un corps hélicoïdal (172) des corps hélicoïdaux (171, 172) s'étend à partir du même point de départ que l'autre corps hélicoïdal (171), est formé avec une pente relativement plus raide sur la surface supérieure de l'autre corps hélicoïdal (171), et est formé plus court que l'autre corps hélicoïdal (171).

2. Dispositif d'écoulement d'air directionnel selon la revendication 1, dans lequel l'espace de formation d'écoulement d'air (161) de la partie de réception de guide (160) est isolé d'une chambre centrale de réception de moteur (132) par une paroi de séparation (133).

3. Dispositif d'écoulement d'air directionnel selon la revendication 1 ou la revendication 2, dans lequel chacun des corps hélicoïdaux (171, 172) a la même largeur que celle de l'espace de formation d'écoulement d'air (161).

4. Dispositif d'écoulement d'air directionnel selon l'une quelconque des revendications 1 à 3, dans lequel les corps hélicoïdaux (171, 172) comprennent :
le premier corps hélicoïdal (171) s'étendant selon une forme de bande dans la direction circonférentielle de l'espace de formation d'écoulement d'air (161), et étant formé selon une forme hélicoïdale pour faire face à l'orifice de décharge (103) ; et
le second corps hélicoïdal (172) étant formé sur la surface supérieure du premier corps hélicoïdal (171) et s'étendant dans la direction circonférentielle de l'espace de formation d'écoulement d'air (161) et étant formé selon une forme hélicoïdale de façon à être orienté en direction de l'orifice de décharge (103).

5. Dispositif d'écoulement d'air directionnel selon la revendication 4, dans lequel une surface d'extrémité inférieure du premier corps hélicoïdal (171) fait face à un trajet de soufflage (153) de l'ensemble ventilateur (150), et une face d'extrémité supérieure du second corps hélicoïdal (172) fait face à l'orifice de décharge (103).

6. Dispositif d'écoulement d'air directionnel selon la revendication 4 ou la revendication 5, dans lequel le second corps hélicoïdal (172) est configuré pour compenser une différence de hauteur provoquée par un étage entre le second corps hélicoïdal (172) et le premier corps hélicoïdal (171) .

7. Dispositif d'écoulement d'air directionnel selon l'une quelconque des revendications 4 à 6, dans lequel le premier corps hélicoïdal (171) s'étend de façon à former un angle central de 250 à 290 degrés avec un centre de l'espace de formation d'écoulement d'air (161) pris comme origine, et
le second corps hélicoïdal (172) s'étend pour former un angle central de 80 à 100 degrés avec le centre de l'espace de formation d'écoulement d'air (161) pris comme l'origine.

8. Dispositif d'écoulement d'air directionnel selon l'une quelconque des revendications 4 à 7, dans lequel le premier corps hélicoïdal (171) est configuré pour avoir un pas de 110 à 120 mm, et
le second corps hélicoïdal (172) est configuré pour avoir un pas de 340 à 360 mm.

9. Dispositif d'écoulement d'air directionnel selon l'une quelconque des revendications 2 à 8 lorsqu'elle dépend de la revendication 2, dans lequel un moteur rotatif (134) est logé dans la chambre de réception de moteur (132), et le moteur rotatif (134) est configuré pour entraîner en rotation un ventilateur de soufflage de l'ensemble ventilateur (150) disposé sous la partie de réception de guide (160).
